Europäisches Patentamt

European Patent Office

Office européen des brevets

(19)

(11) Veröffentlichungsnummer: **0 393 554**
**A2**

(12) **EUROPÄISCHE PATENTANMELDUNG**

(21) Anmeldenummer: **90107167.0**

(22) Anmeldetag: **14.03.90**

(51) Int. Cl.⁵: **B22C 23/02**

(30) Priorität: **20.04.89 DE 3912988**

(43) Veröffentlichungstag der Anmeldung:
**24.10.90 Patentblatt 90/43**

(84) Benannte Vertragsstaaten:
**AT BE CH DE FR GB IT LI NL**

(71) Anmelder: **MESSER GRIESHEIM GMBH**
**Hanauer Landstrasse 330**
**D-6000 Frankfurt/Main(DE)**

(72) Erfinder: **Agel, Manfred**

Gleimstrasse 1
D-6000 Frankfurt/M.(DE)
Erfinder: **Becker, Karl August**
**Bergstrasse 21**
**D-6365 Rosbach(DE)**
Erfinder: **Gollwitz, Karl**
**Offenthaler Strasse 7**
**D-6073 Egelsbach(DE)**
Erfinder: **Gutermann, Traugott**
**Am Lerchenberg 9**
**D-6074 Rödermark(DE)**

(54) **Verfahren zum Berussen von Flächen von Gegenständen mit einem Brenner.**

(57) Die Erfindung betrifft ein Verfahren zum Berußen von Flächen von Gegenständen (11) mit einem Brenner (1) mit dem ein kohlenstoffhaltiges Brenngas mit Luft und/oder Sauerstoff verbrannt wird. Damit auf eine fortlaufend brennende Heizflamme verzichtet und die Berußungsflamme bei Bedarf in einfacher Weise gezündet werden kann, wird das Brenngas-Luft-und/oder Sauerstoff-Gemisch vor der Verbrennung elektrisch mit einem Zündfunken oder einem Lichtbogen (13) gezündet.

EP 0 393 554 A2

# Verfahren zum Beruß en von Flächen von Gegenständen mit einem Brenner

Die Erfindung betrifft ein Verfahren zum Berußen von Flächen von Gegenständen mit einem Brenner nach dem Oberbegriff des Anspruches 1.

Kohlenstoffhaltiges Brenngas bildet bei seiner Verbrennung Ruß, der allgemein geeignet ist für die Verwendung als Festschmiermittel. Er wird daher vorteilhaft als Trennmittel für Gießformen, Blockformen, Kokillen, Vorformen oder ähnlichen, in denen eine Metallschmelze oder Glasschmelze vergossen wird, eingesetzt.

Zum Zünden eines aus einem Brenner austretenden kohlenstoffhaltigen Brenngasstrahles ist es bekannt, daß dieser eine Heizflamme durchquert, wobei die Heizflamme eine Temperatur hat, welche das vorhergehende thermische Kracken der Acetylenmoleküle hervorruft ( EP 0022385 B1) . Dabei brennen die Heizflammen ständig während das Brenngas sequentiell aus der Brenneröffnung ausgestoßen werden kann. Die ständig bei 1400 $^\circ$ C brennenden Heizflammen führen zu einer Umweltbelastung durch Wärme, Geräusche und Stickoxide und vermindern die Wirtschaltlichkeit der Berußungsanlage. Hinzu kommt, daß für die Heizflammen separate Gase zur Verfügung gestellt und zu dem Brenner geführt werden müssen. In den Taktpausen ergibt sich ein erhöhtes Sicherheitsrisiko.

Die Umweltbelastungen sollen gemäß der DE 37 20 181 A1 durch eine Verkleinerung des Mischungsverhältnisses Brenngas-Luft oder Brenngas-Sauerstoff in denjenigen Phasen, in denen keine Berußung stattfinden soll, verringert werden. Dabei brennt die Berußungsflamme kontinuierlich auch innerhalb der Taktpausen mit verkleinertem Mischungsverhältnis. Die Wirtschaftlichkeit der Berußungsanlage wird durch die Erhöhung des Sauerstoff- oder Luftanteiles verschlechtert und das Sicherheitsrisiko (Rückzündrisiko) erhöht.

Der Erfindung liegt daher die Aufgabe zugrunde, ein Berußungsverfahren zu schaffen , bei dem auf eine Heizflamme verzichtet werden kann und bei dem die Berußungsflamme bei Bedarf in einfacher Weise gezündet werden kann.

Diese Aufgabe wird erfindungsgemäß dadurch gelöst, daß das Brenngas-Luft und/oder Sauerstoff-Gemisch vor der Verbrennung elektrisch mit einem Zündfunken oder einem Lichtbogen gezündet wird.

Vorteilhafte Weiterbildungen der Erfindung sind in den Unteransprüchen angegeben.

Die Erfindung ermöglicht es im Bedarfsfall nunmehr während des taktweisen Berußens von Innenflächen von Glasformen mit einem Brenner, diesen nur während des Berußungsvorganges einzuschalten. Dazu werden Magnetventile für das Berußungsgas, das Oxidationsmittel Luft oder Sauerstoff und vorzugsweise einen Leitgasstrahl kurzzeitig geöffnet. Die Schaltimpulse werden über das Steuerprogramm der Produktionsanlage oder von einem separaten Steuersystem eingeleitet. Das kohlenstoffhaltige Brenngas und die Luft bzw. der Sauerstoff werden innerhalb oder außerhalb des Brenners gemischt und strömen gemeinsam in eine innerhalb oder außerhalb des Brenners vorgesehene Zündzone. In der Zündzone sind Zündelektroden angeordnet, die über Schaltimpulse von dem Steuerprogramm der Produktionsanlage oder von einem separaten Steuersystem einen Zündfunken oder einen Lichtbogen erzeugen, mittels dem das Brenngas-Sauerstoff und/oder Brenngas-Luft-Gemisch gezündet wird. Nach dem Berußungsvorgang, der in der Regel 0,2 bis 1 sec. dauert, werden die Magnetventile für die Gase geschlossen und die Zündung abgeschaltet.

Dabei kann zur Einstellung der Rußbeschaffenheit (Korngröße, Konsistenz usw.) dem kohlenstoffhaltigen Brenngas ein Inertgas oder Wasserstoff zugemischt werden.

Bei der taktweisen Berußung von Innenflächen von Glasformen strömt während des Berußungsvorganges und in den Taktpausen durch Öffnungen in dem Boden der Glasformen mit Öl und anderen Komponenten verunreinigte Luft, die zu Ablagerungen an den Wänden der Ausströmkanäle des Brenners führen können. Nach einem Ausführungsbeispiel der Erfindung wird daher vorgeschlagen, daß das Oxidationsmittel Luft oder Sauerstoff mit sehr verminderter Menge die Austrittskanäle durchflutet und so ein Eindringen der verunreinigten Luft verhindert.

Ein aus der Zentralbohrung ausströmender nichtbrennbarer Gasstrahl, beispielsweise Druckluft oder ein inertes Gas, wird als Leitstrahl genutzt. Die kinetische Energie des Leitstrahles wird mittels Magnetventilen über den Düseneingangsdruck gesteuert, und der entsprechenden Tiefe der Form zugeordnet.

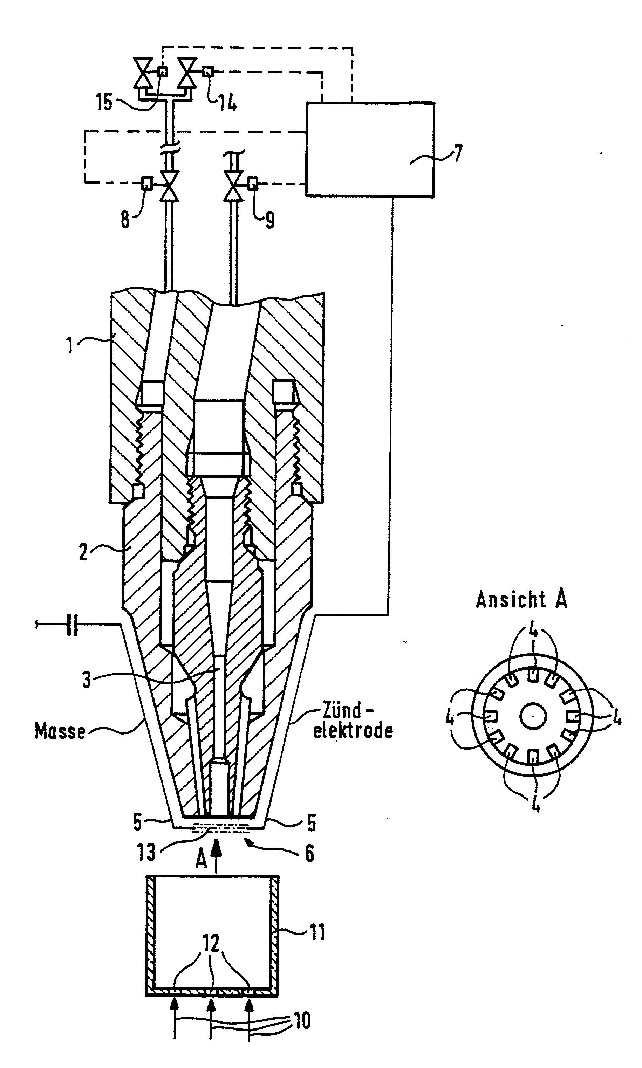

Ein Ausführungsbeispiel der Erfindung ist in der Zeichnung dargestellt.

In der Zeichnung ist ein Brenner 1 mit einer Berußungsdüse 2 dargestellt. Die Berußungsdüse hat eine im Zentrum eingebrachte Bohrung 3, durch die ein nichtbrennbares Gas, vorzugsweise Druckluft, strömt. Über den Düseneingangsdruck wird die kinetische Energie des Leitstrahles der Glasformtiefe angepaßt und so eine gleichmäßige Berußung der gesamten Innenflächen ermöglicht. Konzentrisch zu dieser Zentralbohrung 3 angeordnet, sind die Austrittskanäle 4, die von dem Berußungsgas und einem oxidierenden Gas, vorzugsweise Luft oder Sauerstoff, während der Berußungsphase durchströmt werden. Das zündfähige Gemisch strömt aus den konzentrisch um die Zentralbohrung 3 angeordneten Austrittskanälen 4 aus und durchquert eine Zündzone 6. In der Zündzone, die in der Zeichnung außerhalb des Brenners 1 vorgesehen ist, ist eine elektrische Zündvorrichtung 5 angeordnet, die mit einem Steuersystem 7, verbunden ist. Vorzugsweise über ein Steuerprogramm wird die Zündvorrichtung 5 über einen Schaltimpuls angesteuert. Sie erzeugt zwischen den beiden Elektroden einen Zündfunken oder einen Lichtbogen 13, mittels dem das kohlenstoffhaltige Beru ßungsgas und die Luft bzw. das kohlenstoffhaltige Berußungsgas und der Sauerstoff gezündet werden. Vor der Zündung wurden von dem Steuerprogramm des Steuersystems 7 die Magnetventile 8,9,14,15 für das Brenngas-Luft bzw. Brenngas-Sauerstoff-Gemisch und den Leitstrahl geöffnet. Die Magnetventile 8,9 können hierbei, vorzugsweise die Schaltstellungen "auf" oder "zu" und die Magnetventile 14, 15 zusätzlich noch alle dazwischenliegenden Schaltstellungen einnehmen. Es ist selbstverständlich und bedarf keiner näheren Erläuterung, daß anstatt des Magnetventiles 8 oder -wie in der Zeichnung dargestellt- zusätzlich zu dem Magnetventil 8 zwei Magnetventile 14,15 für die getrennte Steuerung bzw. Regelung des Brenngases und der Luft bzw. des Sauerstoffs, vorgesehen werden können. Nach dem Berußungsvorgang, der in der Regel 0,2 bis 1 sec. dauert, werden die Magnetventile 8,9 und/oder 14,15 für die Gase geschlossen und die Zündung abgeschaltet. Um Ablagerungen durch verunreinigte Luft 10, die durch Öffnungen 12 in der Glasform 11 strömt, zu vermeiden, kann aus den Austrittskanälen 4 das oxidierende Gas, beispielsweise Luft oder Sauerstoff, mit sehr vermindernder Menge die Austrittskanäle 4 durchfluten. Hierzu ist, wie bereits vorstehend beschrieben, das Steuersystem 7 mit einem in der Luft-bzw. Sauerstoffzuleitung angeordneten Magnetventil 14 verbunden.

Ein aus der Mittelbohrung 3 ausströmendes nichtbrennbares Gas, beispielsweise Druckluft oder ein inertes Gas, wird beim Berußen als Leitstrahl benutzt. Die kinetische Energie des Leitstrahles wird über den Düseneingangsdruck mittels Magnetventil 9 gesteuert und der entsprechenden Tiefe der Form zugeordnet. Hierdurch wird es vorteilhaft möglich, den durch die Berußungsflamme erzeugten Ruß an beliebiger Stelle der Glasform 11, insbesondere in beliebiger Tiefe, in der Glasform 11 abzulegen.

## Ansprüche

1. Verfahren zum Berußen von Flächen von Gegenständen mit einem Brenner, mit dem ein kohlenstoffhaltiges Brenngas mit Luft und/oder Sauerstoff verbrannt wird, dadurch gekennzeichnet, daß das Brenngas-Luft und/oder Sauerstoff-Gemisch vor der Verbrennung elektrisch mit einem Zündfunken oder einem Lichtbogen (13) gezündet wird.

2. Verfahren nach Anspruch 1, dadurch gekennzeichnet, daß nach jeder taktweisen Berußung der Flächen die Brenngas-Luft- und/oder Sauerstoffzufuhr geschlossen und die Zündung abgeschaltet wird.

3. Verfahren nach Anspruch 1 oder 2, dadurch gekennzeichnet, daß während der Taktpausen die Luft bzw. der Sauerstoff in verminderter Menge aus dem Brenner ausströmt.

4. Verfahren nach einem der Ansprüche 1 bis 3, dadurch gekennzeichnet, daß mindestens das kohlenstoffhaltige Brenngas aus konzentrisch um eine Zentralbohrung (3) angeordneten Austrittskanälen (4) austritt und aus der Zentralbohrung (3) ein nichtbrennbarer, regelbarer Gasstrahl austritt.

5. Verfahren nach einem der Ansprüche 1 bis 4, dadurch gekennzeichnet, daß zur Einstellung der Rußbeschaffenheit dem Brenngas ein inertes Gas oder Wasserstoff zugemischt wird.

6. Verfahren nach einem der Ansprüche 1 bis 5, dadurch gekennzeichnet, daß als nichtbrennbarer, regelbarer Gasstrahl ein inertes Gas verwendet wird.

Ansicht A

Masse

Zündelektrode